# EUROPÄISCHE PATENTANMELDUNG

(11) **EP 0 681 885 A2**
(43) Veröffentlichungstag der Anmeldung: **15.11.1995**
(21) Anmeldenummer: 95107073.9
(22) Anmeldetag: 10.05.1995
(51) Int. Cl.: B23K 9/32

(54) **Dichtteller für eine Vorrichtung zum Bilden einer abgeschlossenen Wärmestaukammer beim Schweissen von Rohren**

(30) Priorität: 13.05.1994 DE 4416970
(71) Anmelder: Darmstädter GmbH, D-46485 Wesel (DE)
(72) Erfinder: Darmstädter, Arno, D-46485 Wesel (DE)
(74) Vertreter: Funken, Josef, Dipl.-Ing.

(57) **Zusammenfassung**

Ein Dichtteller 7,8 für eine Vorrichtung zum Bilden einer abgeschlossenen Wärmestaukammer 9 beim Schweißen von Rohren 1,2 insbesondere aus Edelstahl und beim anschließenden Glühen der Rohre 1,2 mit einer flexiblen, temperaturbeständigen Scheibe 22 mit umlaufendem Dichtrand 27,28, deren Durchmesser größer als der Innendurchmesser des Rohres 1,2 ist und die zwischen zwei Haltescheiben 29,34 eingefaßt ist, wobei in dem einen Dichtteller 7 wenigstens eine Eintrittsöffnung für Formiergas und in dem anderen Dichtteller 8 wenigstens eine Austrittsöffnung für Formiergas vorgesehen ist, ist so ausgebildet, daß die flexible Scheibe als Gewebescheibe 22 aus einem hochtemperaturbeständigen Gewebe ausgebildet ist, deren Durchmesser größer als der Durchmesser des Rohres 1,2 ist, wobei der äußere Randbereich 27,28 der Gewebescheibe 22 den Dichtrand zwischen der Innenfläche 37 des Rohres 1,2 und der Gewebescheibe 22 bildet, daß auf der Außenfläche 26 der Gewebescheibe 22 eine im Durchmesser kleiner als die Gewebescheibe 22 gehaltene Stützscheibe 29 aus Edelstahl vorgesehen ist, die auf ihrem äußeren Umfang 30 wenigstens einen Bürstenkranz 31,32 aufweist, der dem Innendurchmesser 37 des Rohres 1,2 angepaßt ist, und daß auf der Innenfläche 25 der Gewebescheibe 22 eine Konterscheibe 34 aus Edelstahl vorgesehen ist, deren Durchmesser dem Durchmesser der Stützscheibe 29 entspricht.

## Beschreibung

Die Erfindung betrifft einen Dichtteller für eine Vorrichtung zum Bilden einer abgeschlossenen Wärmestaukammer beim Schweißen von Rohren insbesondere aus Edelstahl und beim anschließenden Glühen der Rohre mit einer flexiblen, temperaturbeständigen Scheibe mit umlaufendem Dichtrand, deren Durchmesser größer als der Innendurchmesser des Rohres ist und die zwischen zwei Haltescheiben eingefaßt ist, wobei in dem einen Dichtteller wenigstens eine Eintrittsöffnung für Formiergas und in dem anderen Dichtteller wenigstens eine Austrittsöffnung für Formiergas vorgesehen ist.

Um den Zutritt von Sauerstoff im Innern eines Rohres beim Schweißen zu verhindern, wird im Innern des Rohres eine Schutzgasatmosphäre geschaffen und während des Schweißens aufrecht erhalten. Beispielsweise wird das Wolfram-Inert-Schweißen (WIG) unter Zuhilfenahme von Argon durchgeführt, damit Sauerstoff von der Schweißstelle ferngehalten wird und somit eine homogene Verbindung ohne Schlackeeinschlüsse und dergleichen zustande kommt. In diesem Falle reicht das Ausströmen von Formiergas aus der Handhabe nicht mehr aus, vielmehr ist zusätzlich ein Beaufschlagen der Rohrinnenseite erforderlich. Außerdem muß die Schweißnaht nach dem Schweißen geglüht werden, um Spannungen aus dem Gefüge zu entfernen. Dabei spielt die Abkühlphase eine entscheidende Rolle, weil ungleichmäßiges Abkühlen den gewünschten Effekt in Frage stellt.

Im Bereich der Schweißnaht muß eine Wärmestaukammer in der Rohrleitung gebildet werden, die zum einen das Austreten des Formiergases während des Schweißens aus dem Rohrinnern verhindert und zum anderen ein plötzliches Abkühlen der Rohre beim Glühen durch Zugluft oder dergleichen ausschließt. Dies bedeutet aber gleichzeitig, daß die Wärmestaukammer einer Temperaturbelastung von 740°C ausgesetzt ist und längere Zeit in der Rohrleitung verbleiben muß.

Hinzu kommt, daß der anschließende Glühprozeß nicht durch Zugluft im Rohr beeinträchtigt werden darf. Kaminwirkung und andere Einflüsse können dazu führen, daß der für die Güte der Schweißstelle so entscheidende Glühprozeß nicht die erforderliche Homogenität des Gefüges erzielt.

Zum Bilden einer Wärmestaukammer ist ein Gerät bekannt, das zwei mit Abstand zueinander angeordnete Abschlußscheiben aufweist, die über einen Distanzhalter in bestimmten Abstand zueinander gehalten sind. Die Abschlußscheibe am Eingang des Gerätes ist auf einem Gaseintrittskörper angeordnet, in dem ein Einlaßkanal für von außen zuzuführendes Schutzgas vorgesehen ist. Das Schutzgas tritt von außen her durch einen Nippel in den Einlaßkanal ein und verläßt den Einlaßkanal auf der Innenseite der Abschlußscheibe durch mehrere radiale Bohrungen eines Gasverteilers. Die Abschlußscheibe am Ende des Gerätes ist auf einem Gasauslaßkörper gelagert, der ebenfalls einen Gasdurchlaßkanal aufweist, der über Auslaßöffnungen mit der äußeren Atmosphäre verbunden ist.

Bei diesen Geräten besteht die Abschlußscheibe grundsätzlich aus einer Dichtscheibe mit wenigstens einer umlaufenden Dichtlippe, die gegen die Innenfläche des Rohres anliegt, und aus zwei Scheiben aus Stahl, zwischen denen die elastische Dichtscheibe angeordnet ist.

Die elastische Scheibe besteht gemäß der DE-PS 40 17 886 aus einem Silikon-Teflon-Gemisch, gemäß der DE-OS 37 28 184 und dem DE-GM 88 07 145 aus einem bis zu 400°C temperarturbeständigen und auf eine Shore-Härte von 35 bis 70° eingestellten Silikonkautschuk oder Fluorkautschuk. Diese auf Gummibasis bestehenden Materialien für die Abdichtscheibe sind bis zu einer Temperatur von etwa 400°C temperaturbeständig. Diese Temperaturbeständigkeit genügt beim Schweißen, weil beim Schweißen normalerweise eine Temperatur von etwa 260°C entsteht.

Beim nachträglichen Glühen der Schweißnaht bzw. des durch das Schweißen beeinflußten Bereiches des Rohres entstehen Temperaturen bis zu 750°C, denen die auf Gummibasis bestehenden Materialien nicht stand halten.

Der Erfindung liegt die Aufgabe zugrunde, einen Dichtteller der einleitend genannten Art zu schaffen, der bei Temperaturen im Bereich von etwa 600 bis 900°C, insbesondere zwischen 700 und 800°C temperaturbeständig ist und innerhalb des Rohres auch über an der Rohrwandung befindliche Hindernisse längsbewegt werden kann.

Zur Lösung dieser Aufgabe ist erfindungsgemäß vorgesehen, daß die flexible Scheibe als Gewebescheibe aus einem hochtemperaturbeständigen Gewebe ausgebildet ist, deren Durchmesser größer als der Durchmesser des Rohres ist, wobei der äußere Randbereich der Gewebescheibe den Dichtrand zwischen der Innenfläche des Rohres und der Gewebescheibe bildet, daß auf der Innenfläche der Gewebescheibe eine im Durchmesser kleiner als die Gewebescheibe gehaltene Stützscheibe aus Edelstahl vorgesehen ist, die auf ihrem äußeren Umfang wenigstens einen Bürstenkranz aufweist, der dem Innendurchmesser des Rohres angepaßt ist, und daß auf der Außenfläche der Gewebescheibe eine Konterscheibe aus Edelstahl vorgesehen ist, deren Durchmesser dem Durchmesser der Stützscheibe entspricht.

Auf diese Weise gelangt man zu einem Dichtteller der vorstehend genannten Art, der in einem Temperaturbereich von etwa 600 bis 900°C, insbesondere 700 bis 800°C beständig ist. Hinzu kommt, daß der Dichtteller über etwa an der Rohrinnenwandung vorhandenen Hindernissen ohne weiteres vorbeigeführt werden kann. Außerdem ist es möglich, den Dichtteller mittels einer Kette aus dem Rohr zu ziehen, auch wenn T-Stücke, Winkel und andere Abgänge dies erschweren.

Der erfindungsgemäße Dichtteller zeichnet sich durch leichte Demontage der Verschleißteile aus und auch dadurch, daß er ausreichende Flexibilität aufweist, um Toleranzen der Rohrinnendurchmesser auszugleichen.

In weiterer Ausgestaltung der Erfindung kann der Dichtteller so ausgebildet sein, daß der Bürstenkranz aus wenigstens einem Bürstenring mit auf dem Bürstenring angeordneten Stahldrahtborsten besteht. Dabei ist es möglich, daß der Bürstenkranz aus Bürstenkranz-Segmenten besteht.

Zweckmäßig besteht der Bürstenkranz aus mehreren gebogenen Bürsten, die auf den Umfang der Stützscheibe geschweißt sind.

Der Bürstenring kann auch einteilig ausgebildet sein und über den Umfang verteilt Stahldrahtborsten aufweisen.

Es ist auf möglich, daß der Bürstenring ein- oder mehrreihig ausgebildet ist und aus einer Vielzahl von Segmenten besteht.

Vorteilhafterweise besteht die Gewebescheibe aus einem mit Kieselsäure angereicherten Glasgewebe.

Das Glasgewebe kann auch beidseitig mit Polyurethan beschichtet sein.

Für gewisse Anwendungsfälle kann es vorteilhaft sein, daß das mit Kieselsäure angereicherte Glasgewebe mit einer metallischen Folie kaschiert ist.

Es ist auch möglich, daß die flexible Scheibe aus einer hochtemperaturbeständigen Faser besteht.

Außerdem kann die flexible Scheibe aus nur einer metallischen Folie oder einem Hohlkörper daraus bestehen.

Die flexible Scheibe kann auch aus einer aufblasbaren Hohlkammer aus metallischen Folien bestehen.

Vorgenannte Gewebe können auch mit einer metallischen Folie kaschiert sein, deren Stärke im Bereich von 20 bis 50 µm liegt.

Die Erfindung wird nachfolgend anhand eines in der Zeichnung dargestellten Ausführungsbeispieles des näheren erläutert. Dabei zeigt
- Fig. 1: zwei gegeneinander gesetzte Rohre mit darin gebildeter Wärmestaukammer und
- Fig. 2: eine vergrößerte Darstellung des in Figur 1 rechts dargestellten Dichttellers.

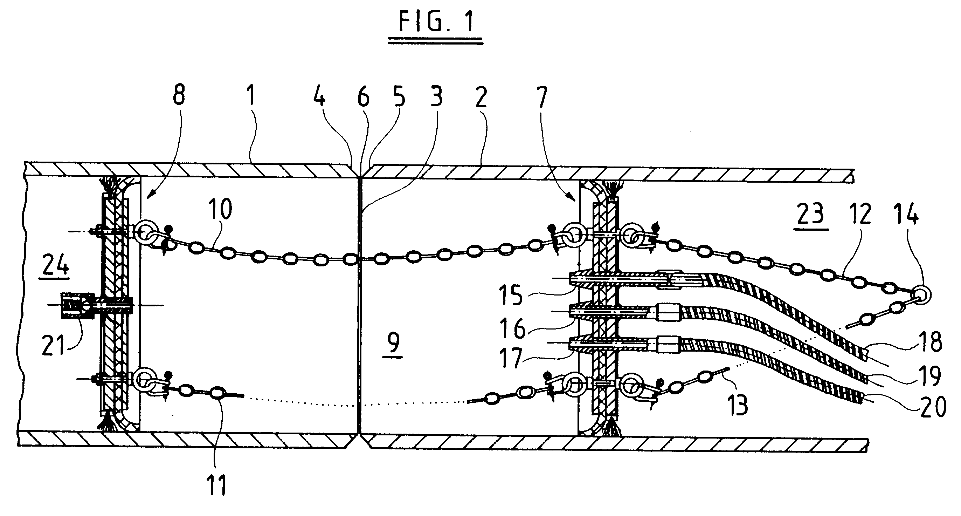

In Figur 1 sind zwei Rohre 1,2 unter Bildung eines möglichst schmalen Spaltes 3 zwischen den Rohren 1,2 gegeneinander gesetzt. Die beiden einander gegenüberliegenden Enden der Rohre 1,2 weisen zwei entgegengesetzt geneigte umlaufende Flächen 4,5 unter Bildung einer umlaufenden V-förmigen Rille 6 auf, in der sich, wenn die beiden Rohre 1,2 miteinander verschweißt werden, eine V-förmige Schweißnaht bildet.

Mit jeweiligem Abstand von dem Spalt 3 sind ein rechter Dichtteller 7 und ein linker Dichtteller 8 unter Bildung einer Wärmestaukammer 9 zwischen den Dichttellern 7,8 gebildet. Die beiden Dichtteller 7,8 sind mittels Ketten 10,11 miteinander verbunden. An dem rechten Dichtteller 7 sind außenseitig Ketten 12,13 vorgesehen, die in einem gemeinsamen Kettenglied 14 münden, von dem aus in nicht näher dargestellter Weise eine weitere nach außen führende Kette angeordnet ist.

In dem rechten Dichtteller 7 sind im dargestellten Ausführungsbeispiel drei Einlaßdüsen 15,16,17 für Formiergas vorgesehen, die außenseitig mit Zuführungsleitungen 18,19,20 für das Formiergas verbunden sind.

In der linken Dichtscheibe 8 ist ein einstellbares Überdruckventil 21 vorgesehen, so daß es möglich ist, in der Warmestaukammer 9 Formiergas unter einem bestimmten vorgegebenen Überdruck zu halten, während die beiden Rohre 1,2 an dem Spalt 3 miteinander verschweißt werden.

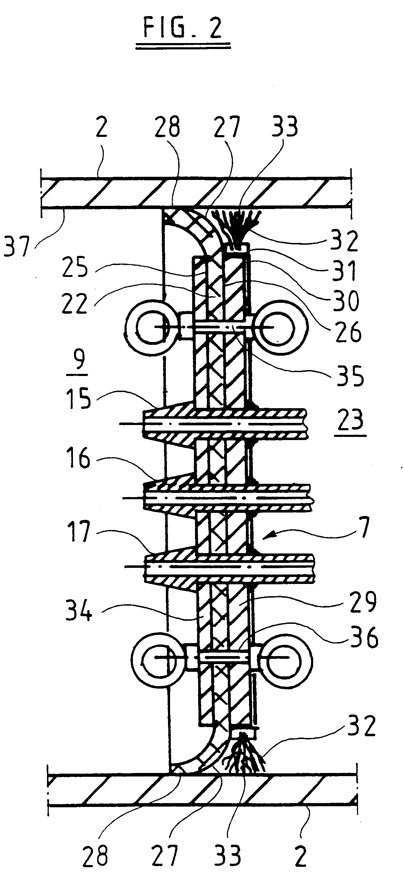

In Figur 2 ist der rechte Dichtteller 7 unter Weglassung aller zum Verständnis des Dichttellers 7 unnötigen Teile dargestellt. Der Dichtteller 7 weist eine Gewebescheibe 22 aus hochtemperaturbeständigem Glasgewebe auf, die kreisförmig ausgebildet ist und im Durchmesser etwas größer gehalten ist als der Innendurchmesser des Rohres 2. Durch den rechten Dichtteller 7 wird die Rohrleitung 1,2 in die Wärmestaukammer 9 und einen Außenbereich 23 unterteilt, während durch den linken Dichtteller 8 die Rohrleitung 1,2 in die Wärmestaukammer 9 und einen weiteren Außenbereich 24 unterteilt wird. Die Gewebescheibe 22 hat eine zur Wärmestaukammer 9 weisende Innenfläche 25 und eine zum Außenbereich 23 orientierte Außenfläche 26. Die flexible temperaturbeständige Gewebescheibe 22 besteht aus 1250 g Glasgewebe, das mit Kieselsäure angereichert und mit Polyurethan beidseitig beschichtet ist. Im Umfangsbereich stellt die Gewebescheibe 22 einen Dichtbereich 27 dar, dessen umfangsseitiges Ende als Dichtlippe 28 wirkt.

An der Gewebescheibe 22 ist außenseitig eine Stützscheibe 29 aus austenitischem Edelstahl vorgesehen, an deren äußerem Umfang 30 ein Bürstenring 31 aus austenitischem Edelstahl befestigt, insbesondere geschweißt ist. Der Bürstenring 31 ist mit einer Bürste 32 aus austenitischem Edelstahl besetzt. Das äußere Ende 33 der Bürste 32 ist im Durchmesser kleiner gehalten als die Gewebescheibe 22.

Innenseitig ist eine Konterscheibe 34 aus austenitischem Edelstahl angeordnet, wobei die Stützscheibe 29 und die Konterscheibe 34 über Schrauben 35,36 miteinander verbunden sind und die Gewebescheibe 22 aus Glasgewebe einschließen.

Der Dichtbereich 27 der Gewebescheibe 22 ist zur Wärmestaukammer 9 hin gebogen und bildet die gegen die Innenwandung 37 des Rohres 2 liegende Dichtlippe 28. Die Borsten 32 liegen mit ihrem Umfang 33 dicht gegen die Innenwandung 37 des Rohres 2, wodurch der Dichtteller 7 innerhalb des Rohres 2 in seiner gewünschten Lage festgelegt bzw. fixiert ist. Diese Festlegung erfolgt dadurch, daß die Bürste 32 mit ihrem Außenbereich 33 fest gegen die Innenwandung 37 des Rohres 2 liegt. Hierdurch braucht die Dichtlippe 28 lediglich die Dichtungsfunktion zu übernehmen, während die stabile Anordnung innerhalb des Rohres 2 durch die Bürste 32 sichergestellt ist.

Zum Verschweißen der beiden Rohre 1,2 an dem Spalt 3 werden beide Rohre 1,2 unter Belassung eines bestimmten gewünschten Spaltes 3 koaxial gegeneinandergesetzt und die Wärmestaukammer 9 über die Düsen 15,16,17 mit Formiergas gefüllt, wobei ein bestimmter gewünschter Druck eingestellt und aufrecht erhalten wird. Anschließend werden die Rohre 1,2 an dem Spalt 3 durch eine V-förmige Schweißnaht miteinander verschweißt.

### Bezugszeichenliste

- 1: Rohr
- 2: Rohr
- 3: Spalt
- 4: Fläche
- 5: Fläche
- 6: Rille
- 7: Dichtteller
- 8: Dichtteller
- 9: Wärmestaukammer
- 10: Kette
- 11: Kette
- 12: Kette
- 13: Kette
- 14: Kettenglied
- 15: Düse
- 16: Düse
- 17: Düse
- 18: Leitung
- 19: Leitung
- 20: Leitung
- 21: Rückschlagventil
- 22: Gewebescheibe
- 23: Außenbereich
- 24: Außenbereich
- 25: Innenseite
- 26: Außenseite
- 27: Dichtbereich
- 28: Dichtlippe
- 29: Stützscheibe
- 30: Umfang
- 31: Bürstenring
- 32: Bürste
- 33: Umfang
- 34: Konterscheibe
- 35: Schraube
- 36: Schraube
- 37: Innenwandung

## Patentansprüche

1. Dichtteller für eine Vorrichtung zum Bilden einer abgeschlossenen Wärmestaukammer beim Schweißen von Rohren insbesondere aus Edelstahl und beim anschließenden Glühen der Rohre mit einer flexiblen, temperaturbeständigen Scheibe mit umlaufendem Dichtrand, deren Durchmesser größer als der Innendurchmesser des Rohres ist und die zwischen zwei Haltescheiben eingefaßt ist, wobei in dem einen Dichtteller wenigstens eine Eintrittsöffnung für Formiergas und in dem anderen Dichtteller wenigstens eine Austrittsöffnung für Formiergas vorgesehen ist, **dadurch gekennzeichnet,** daß die flexible Scheibe als Gewebescheibe (22) aus einem hochtemperaturbeständigen Gewebe ausgebildet ist, deren Durchmesser größer als der Durchmesser des Rohres (1,2) ist, wobei der äußere Randbereich (27,28) der Gewebescheibe (22) den Dichtrand zwischen der Innenfläche (37) des Rohres (1,2) und der Gewebescheibe (22) bildet, daß auf der Außenfläche (26) der Gewebescheibe (22) eine im Durchmesser kleiner als die Gewebescheibe (22) gehaltene Stützscheibe (29) aus Edelstahl vorgesehen ist, die auf ihrem äußeren Umfang (30) wenigstens einen Bürstenkranz (31,32) aufweist, der dem Innendurchmesser (37) des Rohres (1,2) angepaßt ist, und daß auf der Innenfläche (25) der Gewebescheibe (22) eine Konterscheibe (34) aus Edelstahl vorgesehen ist, deren Durchmesser dem Durchmesser der Stützscheibe (29) entspricht.

2. Dichtteller nach Anspruch 1, dadurch gekennzeichnet, daß der Bürstenkranz (31,32) aus wenigstens einem Bürstenring (31) mit auf dem Bürstenring (31) angeordneten Stahldrahtborsten (32) besteht.

3. Dichtteller nach Anspruch 1 oder 2, dadurch gekennzeichnet, daß der Bürstenkranz (31,32) aus Bürstenkranz-Segmenten besteht.

4. Dichtteller nach einem der vorhergehenden Ansprüche, dadurch gekennzeichnet, daß der Bürstenkranz (31,32) aus mehreren gebogenen Bürsten besteht, die auf den Umfang (30) der Stützscheibe (29) geschweißt sind.

5. Dichtteller nach einem der vorhergehenden Ansprüche, dadurch gekennzeichnet, daß der Bürstenring (31) einteilig ausgebildet ist und über den Umfang verteilt Stahldrahtborsten (32) aufweist.

6. Dichtteller nach einem der vorhergehenden Ansprüche, dadurch gekennzeichnet daß der Bürstenring (31) ein- oder mehrreihig ausgebildet ist und aus einer Vielzahl von Segmenten besteht.

7. Dichtteller nach einem der vorhergehenden Ansprüche, dadurch gekennzeichnet, daß die Gewebescheibe (22) aus einem mit Kieselsäure angereicherten Glasgewebe besteht.

8. Dichtteller nach Anspruch 7, dadurch gekennzeichnet, daß das Glasgewebe beidseitig mit Polyurethan beschichtet ist.

9. Dichtteller nach einem der vorhergehenden Ansprüche, dadurch gekennzeichnet, daß das mit Kieselsäure angereicherte Glasgewebe mit einer metallischen Folie kaschiert ist.

10. Dichtteller nach einem der vorhergehenden Ansprüche, dadurch gekennzeichnet, daß die flexible Scheibe (22) aus einer hochtemperaturbeständigen Faser besteht.

11. Dichtteller nach einem der vorhergehenden Ansprüche, dadurch gekennzeichnet, daß die flexible Scheibe (22) aus einer metallischen Folie besteht.

12. Dichtteller nach einem der vorhergehenden Ansprüche, dadurch gekennzeichnet, daß die flexible Scheibe (22) aus einer aufblasbaren Hohlkammer aus metallischen Folien besteht.
